# EUROPEAN PATENT APPLICATION

(11) **EP 4 779 449 A1**
(43) Date of publication of application: **22.07.2026**
(21) Application number: 26152242.9
(22) Date of filing: 16.01.2026
(51) Int. Cl.: G06F 3/0484, G06F 30/12, G06F 30/17, G06F 111/04

(54) **SYSTEMS AND METHODS FOR DETECTING EXCESSIVE COMPONENT MOVEMENT IN COMPUTER-AIDED DESIGN ASSEMBLIES**

(30) Priority: 16.01.2025 US 202563745937 P; 11.02.2025 US 202519050507
(71) Applicant: Dassault Systemes SolidWorks Corporation, Waltham, MA 02451-1223 (US)
(72) Inventor: Brooking, Christopher George, Cambridge, CB4 0FK (GB); Birkett-Smith, Nicholas Constantine, Cambridge, CB4 0FK (GB)
(74) Representative: Bandpay & Greuter

(57) **Abstract**

Embodiments provide computer-implemented systems and methods for detecting excessive component movements in computer-aided design (CAD) assemblies. An embodiment displays, in a computer interface, a CAD assembly comprising a plurality of components and determines a bounding box encompassing the CAD assembly displayed. In turn, an indication of movement of a component, of the plurality of components, from a starting position to a final position is received. Based on the bounding box and the indication of movement received, the movement is evaluated with respect to at least one threshold. Responsive to the evaluating determining the movement exceeds the at least one threshold, a notification is presented to a user in the computer interface.

## Description

### BACKGROUND

A number of existing product and simulation systems are offered on the market for the design and simulation of objects (e.g., components, parts, and assemblies of components or parts, among other examples) in a modeling space (e.g., a three-dimensional (3D) modeling space). Such systems typically employ computer-aided design (CAD) and computer-aided engineering (CAE) programs. These systems allow a user to construct, manipulate, and simulate complex 3D models of objects or assemblies of objects, e.g., real-world objects. CAD and CAE systems, thus, provide a representation of modeled objects using edges, lines, faces, polygons, or closed volumes. Lines, edges, faces, polygons, and closed volumes may be represented in various manners, e.g., with non-uniform rational basis-splines (NURBS).

CAD systems manage parts or assemblies of parts of modeled objects, which are mainly specifications of geometry. In particular, CAD files contain specifications, from which geometry is generated. From geometry, a representation is generated. Specifications, geometries, and representations may be stored in a single CAD file or multiple CAD files. CAD systems include graphic tools for representing the modeled objects to designers; these tools are dedicated to the display of complex objects. For example, an assembly may contain thousands of parts, i.e., components. A CAD system can be used to manage models of objects, which are stored in electronic files.

CAD and CAE systems use computer-based models to represent objects. A computer-based model may be programmed in such a way that the model has the properties (e.g., physical, material, or other physics based) of the underlying real-world object or objects that the model represents. Moreover, computer-based models may be used to perform simulations of the real-word objects/environments that the models represent.

### SUMMARY

CAD and CAE programs visually present/display assemblies of components, e.g., real-world objects, to users in a modeling space. In these modeling spaces, users design and modify representations (e.g., computer-based models, CAD assemblies, etc.) of objects, e.g., real-world objects. As part of this process, users often move components, e.g., directly through dragging, or indirectly through creating/modifying a constraint. Depending on the orientation of the assembly and perspective of the user, it may appear to a user that an object is being moved a small amount while, in fact, because of certain circumstances, e.g., a modeling constraint, the component has moved a large distance, possibly out of range to be rendered at the scale of the model. In other words, a small movement in two-dimensional space (e.g., the user's perspective of dragging a component) may cause a large movement in the modeling space (e.g., the three-dimensional space/coordinate system of the assembly).

Such large movements my cause components to no longer be visible to users and may make it difficult for the user to continue the design process. As such, functionality to notify users of large unintended component movements is needed. Embodiments provide such functionality.

One such embodiment is directed toward a computer-implemented method for detecting excessive component movement in a CAD assembly. The method includes a processor displaying, in a computer interface, a CAD assembly comprising a plurality of components and determining a bounding box encompassing the CAD assembly displayed. In turn, an indication of movement of a component, of the plurality of components, from a starting position to a final position, is received. Based on the bounding box and the indication of movement received, the movement is evaluated with respect to at least one threshold and, responsive to the evaluating determining the movement exceeds the at least one threshold, a notification is presented to a user in the computer interface.

According to an embodiment, the received indication of movement indicates a drag action on the component in the computer interface. In an example embodiment, evaluating the movement with respect to the at least one threshold comprises calculating a first ratio between: (i) a length between the starting position and the final position and (ii) a geometric property of the bounding box and calculating a second ratio between: (i) the length between the starting position and the final position and (ii) a length of the drag action. According to an embodiment, the geometric property of the bounding box may be a diagonal size of the bounding box. In another embodiment, the at least one threshold includes a first threshold and a second threshold. According to one such embodiment, evaluating the movement with respect to the at least one threshold includes comparing the first ratio to the first threshold and comparing the second ratio to the second threshold. Further, such an embodiment, responsive to comparing the first ratio to the first threshold determining the first threshold is exceeded, and responsive to comparing the second ratio to the second threshold determining the second threshold is exceeded, determines the movement exceeds the at least one threshold.

In yet another embodiment, the received indication of movement indicates at least one of applying or modifying a constraint with respect to the component. According to such an embodiment, applying or modifying the constraint causes the component to move from the starting position to the final position. In an embodiment, evaluating the movement with respect to the at least one threshold includes calculating a ratio between: (i) a length between the starting position and the final position and (ii) a geometric property of the bounding box. According to one such embodiment, evaluating the movement with respect to the at least one threshold includes (i) comparing the ratio to the at least one threshold and (ii) responsive to comparing the ratio to the at least one threshold determining the at least one threshold is exceeded, determining the movement exceeds the at least one threshold.

In an embodiment, the presented notification includes an indication that the component has moved an excessive distance.

In another embodiment, the presented notification includes an option to undo the movement. One such embodiment further includes, responsive to the presented notification, receiving an indication to undo the movement and, responsive to receiving the indication to undo the movement, returning the component to the starting position.

Another embodiment for detecting excessive component movement in a CAD assembly comprises displaying, in a computer interface, a CAD assembly comprising a plurality of components and receiving an indication of initiation of a movement action. Responsive to receiving the indication of initiation of the movement action, such an embodiment continues by determining a bounding box encompassing the CAD assembly displayed and tracking movement of each moving component of the plurality of components. To continue an indication of cessation of the movement action is received. Responsive to receiving the indication of cessation of the movement action, the embodiment continues by, based on the tracking, determining a largest movement amongst the movement of each moving component of the plurality of components. The embodiment continues by, based on the bounding box, evaluating the largest movement with respect to at least one threshold and, responsive to the evaluating determining the largest movement exceeds the at least one threshold, presenting a notification to a user in the computer interface.

In a further embodiment, tracking movement of each moving component of the plurality of components includes storing, in a data structure, a starting position and a corresponding final position of each moving component.

In another embodiment, determining the largest movement includes using the data structure, calculating movement length as distance between each starting position and corresponding final position, and determining the largest movement as a movement having a longest movement length.

Another embodiment is directed toward a computer-implemented system for detecting excessive component movement in a CAD assembly. The system includes a processor and a memory with computer code instructions stored thereon. In such an embodiment, the processor and the memory, with the computer code instructions, are configured to cause the system to implement any embodiments, or combination of embodiments, described herein.

Still another example embodiment is directed toward a computer program product for detecting excessive component movement in a CAD assembly. The computer program product includes a non-transitory computer-readable medium with computer code instructions stored thereon. The computer code instructions are configured, when executed by a processor, to cause an apparatus associated with the processor to implement any embodiments, or combination of embodiments, described herein.

It is noted that embodiments of the methods, systems, and computer program products may be configured to implement any embodiments or combination of embodiments, described herein.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIGs. 1A - 1E illustrate an example technical problem solved by embodiments.
FIG. 2 is a flow diagram illustrating a computer-implemented method for detecting excessive component movement in a CAD assembly, according to an embodiment.
FIGs. 3A and 3B show example bounding boxes that may be utilized by embodiments to detect excessive component movement.
FIG. 4 is a flow diagram illustrating a method, according to another embodiment, to detect excessive component movement.
FIG. 5 illustrates a computer network or similar digital processing environment in which embodiments may be implemented.
FIG. 6 is a simplified block diagram illustrating an example internal structure of a computer in the environment of FIG. 5.

### DETAILED DESCRIPTION

A description of example embodiments follows.

Embodiments provide functionality for detecting excessive component movement in computer-based model assemblies, e.g., detecting undesired and excessive movement of a part that makes up a displayed CAD assembly.

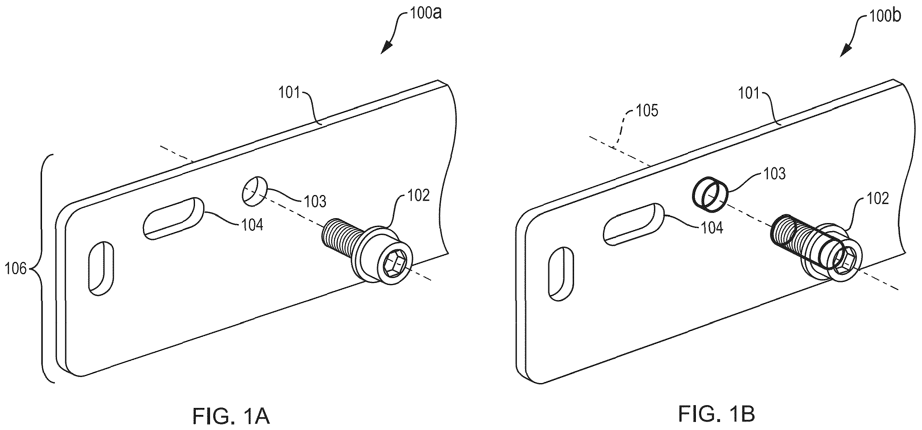

FIGs. 1A - 1E, across views 100a-e, illustrate an example technical problem of unwanted excessive component movement in a 3D modeling space solved by embodiments disclosed herein.

FIG. 1A is graphical user interface view 100a of a CAD assembly 106 that includes a plate 101 (with a round hole 103 and a horizontal slot 104) and a bolt 102. The view 100a is an example of a 3D modeling space of a CAD software application in which a user may be designing a real-world object, such as a car.

The view 100b of FIG. 1B shows application of a concentric constraint to the bolt 102 where the bolt 102 is constrained to the hole 103, i.e., the bolt 102 and hole 103 must be concentric. In the view 100b, the bolt 102 is not fully defined, i.e., it is free to move anywhere along the concentric axis 105 of the round hole 103.

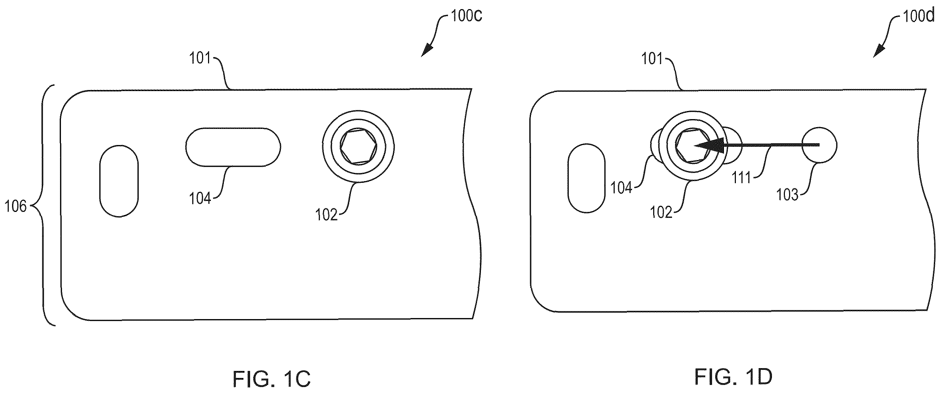

To continue this illustrative example, a user rotates the view 100b of FIG. 1B to an orientation which is normal (or nearly normal) to axis 105. The view 100c of FIG. 1C shows this rotated view of the assembly 106. To continue (as shown by the view 100d of FIG. 1D), the user attempts to move (shown by arrow 111) the bolt 102 to the left from the round hole 103 to position the bolt 102 on the horizontal slot 104. The user may be unaware that the bolt 102 was previously constrained to the hole 103. As shown in the view 100d, from the user's perspective, the move appears successful and it appears that the bolt 102 has only moved a small distance, e.g., the length of the arrow 111.

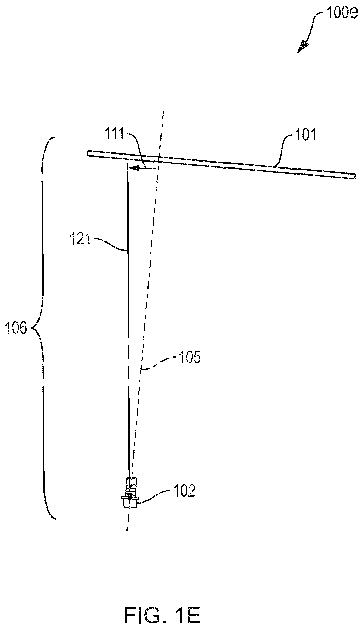

However, the view 100e of FIG. 1E shows that the bolt 102 has unintentionally moved a significant distance (shown by the arrow 121). After moving the bolt 102 leftward, as shown in FIG. 1D, the user may rotate the view orientation and discover that the bolt 102 has unexpectedly moved a long distance away from the plate 101. In the view 100e, the arrow 111 indicates the on-screen movement of the bolt (from FIG. 1D leftward from the round hole 103 to the horizontal slot 104) and the arrow 121 represents the unintended approximate movement of the bolt 102 in the 3D space (i.e., the coordinate system of the CAD assembly). This movement 121 in the 3D space is caused by the concentric constraint of the bolt 102 along axis 105. In particular, in order to satisfy the concentric constraint, the bolt must move the distance 121 in 3D space of the assembly 106.

In the example shown in FIGs. 1A - 1E, the view orientation including the unintentionally large movement was far enough from normal to the axis 105 to make this issue manageable to the user. The user can see the entire assembly (even in view 100e) and can to drag the bolt 102 back into a desired position. However, if the angle between the view orientation direction and the axis 105 was more acute, the distance moved (arrow 121) by the bolt 102 in the 3D space of the assembly 106 would have been extremely large compared to the on-screen movement (arrow 111). In these extreme cases, the user could encounter several problems.

One of these problems occurs when a user selects a center of view rotation of an assembly. When a center of view rotation of an assembly is selected the assembly is positioned at the center of a bounding box of the entire assembly. Such a bounding box encompasses all components and, thus, the center of the bounding box is shifted approximately halfway to the component which has moved the extreme distance. This manifests itself in an unexpected and difficult to navigate model-view rotation-behavior, since small view rotations are amplified by the far away center of rotation. Further, when zooming outward to include the entire assembly on the screen, (e.g., zoom to fit), it is possible that the zoom levels will be so far out that components may become smaller than a single pixel on the computer screen, resulting in the assembly appearing empty. Embodiments can solve these problems and can notify users of large movements and undue these large movements. This greatly improves the user experience and has a significant ergonomic impact by eliminating the need for excessive user interaction to correct views.

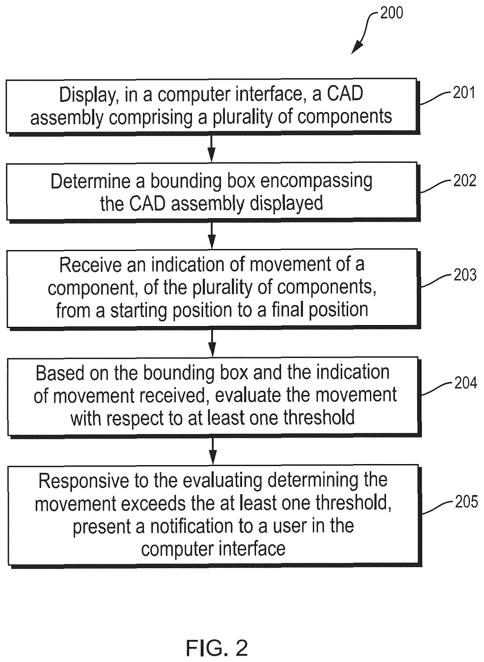

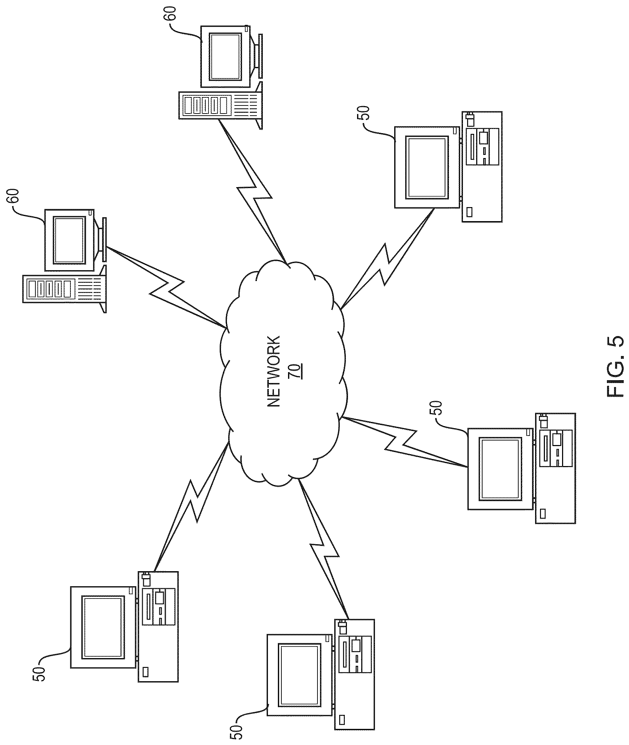

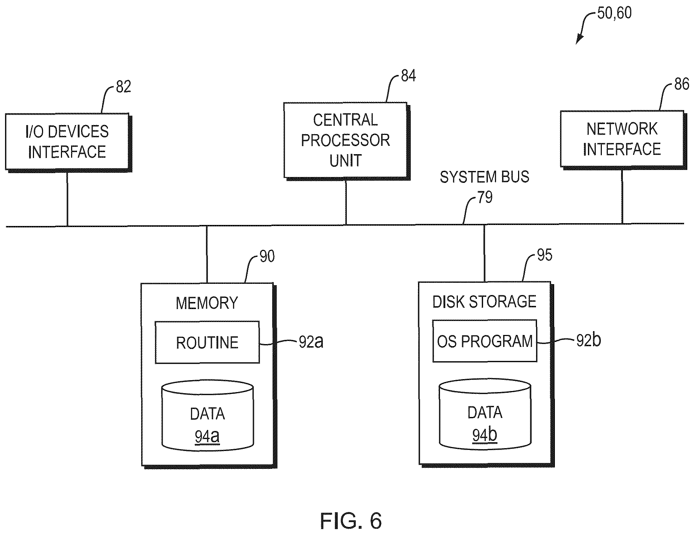

FIG. 2 is a flow diagram illustrating a computer-implemented method 200 for detecting excessive component movement in a CAD assembly, according to an embodiment. The method 200 is computer implemented and, as such, the functionality and effective operations, e.g., the steps 201-205, can be automatically implemented by one or more digital processors. Moreover, the method 200 can be implemented using any computing device or combination of computing devices known in the art. Amongst other examples, the method 200 can be implemented using the computer network environment described herein below in relation to FIG. 5 and the computer system described herein below in relation to FIG. 6.

The method 200 starts at step 201 by displaying, in a computer interface, a CAD assembly comprising a plurality of components. Next, at step 202, a bounding box is determined that encompasses the CAD assembly displayed. In turn, at step 203, an indication of movement of a component, of the plurality of components, (for example, the bolt 102) from a starting position to a final position, is received. At step 204, based on the bounding box and the indication of movement received, the movement is evaluated with respect to at least one threshold. Responsive to the evaluating 204 determining the movement exceeds the at least one threshold, the method 200 presents 205 a notification to a user in the computer interface.

The CAD assembly displayed at step 201 may be any computer-based model known to those of skill in the art. Moreover, the CAD assembly may be displayed responsive to user interaction. Further still, the CAD assembly may be displayed 201 in an interface of an existing CAD/computer-based design application and this existing application may be modified to implement the method 200.

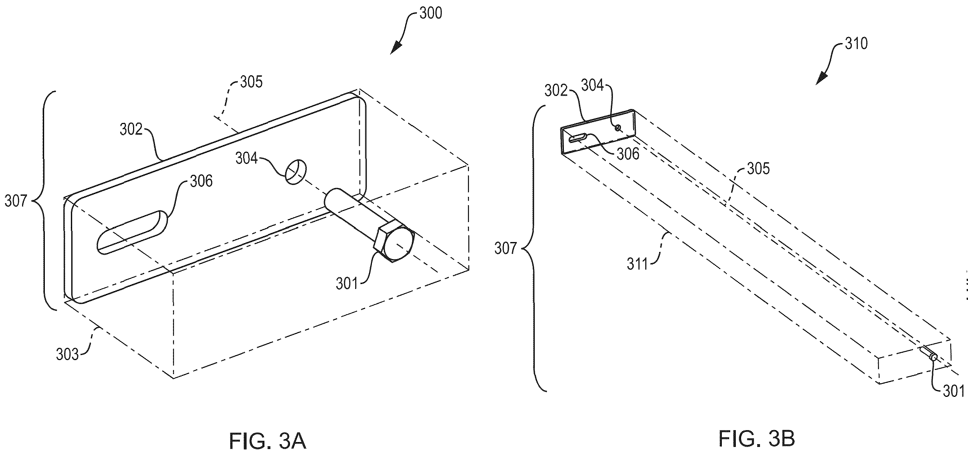

At step 202, the bounding box may be determined using a methodology known to those of skill in the art. Further, the bounding box determined at step 202 may be a smallest bounding box that encompasses the components, e.g., all of the elements, of the displayed assembly. An example bounding box 303 that may be determined at step 202 is described herein in relation to FIG. 3A.

The indication of movement received at step 203 may take any form known to those of skill in the art. For instance, the indication of movement may be a change in position, e.g., in 3D space, of a component that is stored in a data structure received at step 203. Moreover, in an embodiment, the indication of movement may be the output from a constraint solver. Further still, the indication of movement may indicate that a component was moved directly, i.e., a movement occurred due to a direct user action, e.g., a drag action, to move said component. In contrast, the indication of movement received 203 may indicate that a component moved indirectly, i.e., a movement occurred due to a user's action where the action was not a movement specific action, e.g., a user modified or created a constraint and implementing the constraint caused the movement. According to an embodiment, the indication of movement received at step 203 indicates a drag action (e.g., a click, drag, and release, with, for example, a computer cursor) on the component in the computer interface. According to another embodiment, the indication of movement received at step 203 may indicate at least one of applying or modifying a constraint with respect to the component, where applying or modifying the constraint causes the component to move from the starting position to the final position.

According to an embodiment where the indication of movement received at step 203 indicates a drag action, evaluating the movement with respect to the at least one threshold at step 204 may include calculating a first ratio and a second ratio. In an embodiment, the first ratio is a ratio between: (i) a length between the starting position and the final position of the component and (ii) a geometric property of the bounding box determined at step 202 (e.g., a diagonal size of the bounding box). Further, in such an embodiment, the second ratio is between: (i) the length between the starting position and the final position of the component and (ii) the length of the drag action. To continue, in such an embodiment, the at least one threshold may include a first threshold and a second threshold and evaluating the movement with respect to the at least one threshold may include (i) comparing the first ratio to the first threshold, (ii) comparing the second ratio to the second threshold, and (iii) responsive to comparing the first ratio to the first threshold determining the first threshold is exceeded, and responsive to comparing the second ratio to the second threshold determining the second threshold is exceeded, determining the movement exceeds the at least one threshold. Importantly, such an embodiment identifies component movements that are unintentionally large. Specifically, the "first ratio" (between (i) length between starting and final position of the component and (ii) geometric property of the bounding box) identifies movements that are larger, however, if only the "first ratio" is considered, intentional large movements may be flagged. Such an embodiment avoids notifying users of intentional large movements by determining and evaluating the "second ratio" (between (i) the length between the starting position and the final position of the component and (ii) the length of the drag action). This second ratio allows such an embodiment to identify movements that are likely unintentionally large by considering the ratio between the distance of the on screen movement from the user's perspective (the length of the drag) and the movement distance of the component itself in three-dimensional space (the length between the starting position and the final position).

Further, it is noted that rather than using the length between the starting position and the final position, such an embodiment may instead consider a second bounding box that encompasses the CAD assembly when the component is in the final position, e.g., the bounding box 311 described herein in relation to FIG. 3B. In such an example embodiment, the first threshold may be determined to be exceeded if the size of the bounding box after the component has reached its final position is five times larger than the size of the bounding box while the component is in the starting position. Additionally, in an example embodiment, the second threshold may be determined to be exceeded if the movement length in 3D space (i.e., length between starting and final position) is ten times larger than the length of the drag action.

According to another embodiment, the indication of movement received at step 203 indicates at least one of applying or modifying a constraint. In such an embodiment, evaluating the movement with respect to the at least one threshold may include calculating a ratio between (i) a length between the starting position and the final position of the component and (ii) a geometric property of the bounding box. Further, evaluating the movement with respect to the at least one threshold at step 204 may include comparing the ratio (of a length between the starting position and the final position of the component, and a geometric property of the bounding box) to at least one threshold, and responsive to comparing the ratio to the at least one threshold determining the at least one threshold is exceeded, determining the movement exceeds the at least one threshold.

According to an embodiment, the notification presented at step 205 may include an indication that the component has moved an excessive distance. Additionally, according to an embodiment, the presented notification may include an option to undo the movement. Further, such an embodiment may include, responsive to the presented notification, receiving an indication to undo the movement (e.g., from a user) and, responsive to receiving the indication to undo the movement, returning the component to the starting position.

FIGs. 3A depicts an interface 300 illustrating an example bounding box 303 that may be determined and utilized by embodiments. For instance, the bounding box may be determined at step 202 and utilized at step 204 of the method 200. The interface 300 includes a CAD model assembly 307 that includes a bolt 301 constrained along axis 305, and a plate 302 comprising a circular hole 304 and a horizontal slot 306. In this example, the bounding box 303 is a smallest cuboid that encompasses the assembly 307, i.e., fits both the plate 202 and the bolt 201, as initially displayed in the interface 300.

FIG. 3B illustrates an interface 310 displaying the assembly 307 after a user moves the bolt 301 to be over the horizontal slot 306 (similarly to the example described hereinabove in relation to FIGs. 1A-1E). Further, the interface 310 depicts a bounding box 311 that may be determined and utilized by embodiments, e.g., at step 204 of the method 200. In the interface 301, unbeknownst to the user, the bolt 301 is constrained to axis 305 because the bolt 301 is constrained to be concentric with hole 304. Thus, when the bolt 301 is moved to be over the slot 306, the bolt 301 has unexpectedly moved a long distance away from the plate 302. When the bolt is in the final position (resulting from the movement) an embodiment may calculate the bounding box 311. The resulting bounding box 311 is a smallest cuboid that encompasses the assembly 307, i.e., fits both the plate 302 and the bolt 301, after the movement. It can be seen that the bounding box 311 is significantly larger than the bounding box 303 so as to encompass the modified assembly 307 depicted in FIG. 3B. The bounding boxes 303 and 311 may be utilized to determine if the movement of the bolt 301 from the starting position shown in FIG. 3A to the final position shown in FIG. 3B exceeds at least one threshold.

CAD systems often use constraint systems (for example, Mates, in SOLIDWORKS^{®}) to control the relative position of components of an assembly. Constraints can be managed by, for example, a constraint solver. A constraint solver may be a 'black box' solver, in that the CAD system will input the constraints and the relevant geometry from the assembly, and any positional changes, and the solver will return transforms that tell the CAD system where to move the components in the coordinate system of the assembly such that the constraints are satisfied. Dragging a component may consist of a loop whereby a user's input is fed to the solver, the solver calculates updated positions of the affected components in the assembly. The CAD system applies these positions, which is then repeated until the user ceases the drag input. Embodiments may detect when component movements caused by constraint(s) and/or dragging actions are excessive. Such embodiments may receive data regarding movement from a constraint solver or dragging solver and use this data to determine if a movement is excessive.

To detect when an abnormally large output movement has occurred, an embodiment considers at least two measurements. In such an embodiment, a first measurement considered may be the largest distanced moved by any component at the end of the drag, relative to the bounding box of the assembly at the start of the drag. In an embodiment, the bounding box may be oriented on the regular X, Y, Z axes, even if a smaller bounding box with an alternate orientation would be possible. Further, a second measurement may be the ratio of the largest distance moved by any component to the length of the on-screen cursor movement.

To calculate these measurements, during the drag, an embodiment maintains a list of moving components and their starting and current positions. When the drag is finished, such an embodiment inspects the list to calculate which component has the largest movement and what the length of the movement is.

An example embodiment first displays, in a computer interface, a CAD assembly comprising a plurality of parts and receives an indication of an initiation of a movement action. Responsive to receiving the indication of the movement action, such an embodiment determines a bounding box encompassing the displayed CAD assembly and tracks movement of each moving component of the plurality of components. In turn, an indication of cessation of the movement action is received. Responsive to receiving the indication of cessation of the movement action, such an embodiment: (1) determines, based on the tracking, a largest movement amongst the movement of each moving component of the plurality of the components, (2) based on the bounding box, evaluates the largest movement with respect to at least one threshold, and (3) responsive to the evaluating determining the largest movement exceeds the at least one threshold, presents a notification to a user in the computer interface.

According to an embodiment, tracking movement of each moving component of the plurality of components may include storing, in a data structure, a starting position and a corresponding final position of each moving component. According to an embodiment, determining the largest movement may include using the data structure to calculate a movement length as a distance between each starting position and corresponding final position. Such an embodiment determines the largest movement as a movement having the longest movement length.

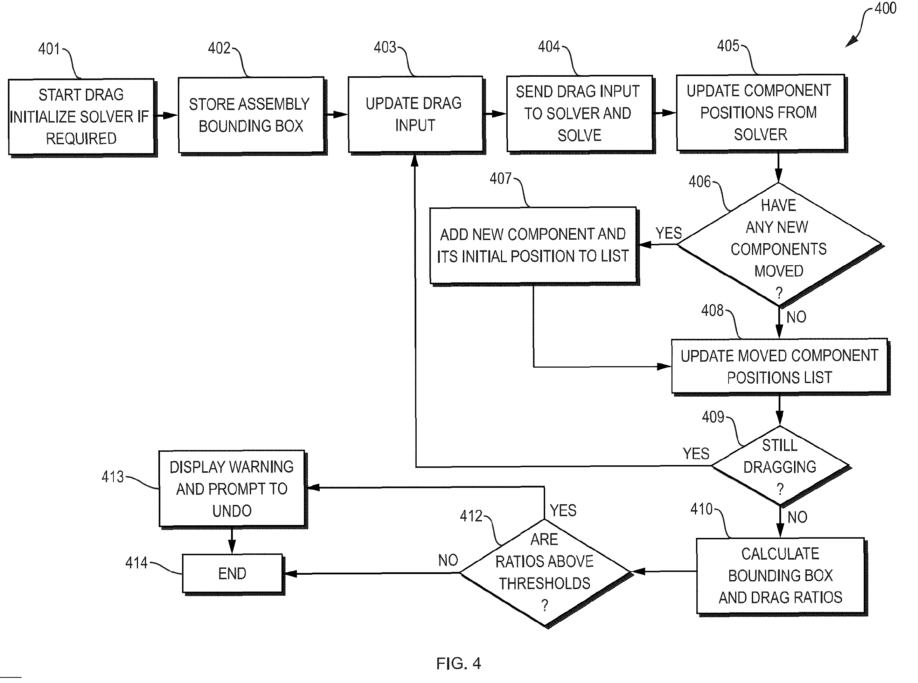

FIG. 4 is a flow diagram illustrating a method 400 for detecting excessive component movement according to an embodiment. The method 400 maintains a list of moving components in a CAD assembly and the starting and current positions of the components, thereby tracking the moving components When the drag is finished, the method 400 embodiment inspects the list to calculate which component has the largest movement and what the size of the movement is.

Method 400 begins at step 401 by receiving an indication of initiating a drag action. At step 401, a drag solver may be initialized. Next, at step 402 a bounding box of the assembly is determined and stored in memory. The drag input is then updated (e.g., by capturing a drag input from the user provided via an input, such as a computer mouse, keyboard, or touchscreen input) at step 403 as the drag action is being performed. The method 400 may return to step 403 from step 409 and continue to update the drag input if required. From step 403, the method 400 sends the drag input to the solver at step 404 and the solver determines the transformation matrix to determine the movement of the component in the 3D space. For instance, in an embodiment, the transformation matrix determined at step 404 is a 3x3 matrix A. When the matrix A is applied to a 3-value vector ***x,*** representing a position of a point in cartesian space, the result, ***x'*** defined as ***x'** =* A***x***, is the new position of x that is both translated, and if applied to geometry of a higher dimension (e.g., a line from point ***x1*** to point ***x2***), rotated. At step 405, the component positions are updated in the assembly using the transformations determined by the solver at step 404. Next, at step 406 the method 400 checks to see if any new components have moved. Responsive to no new components having moved, i.e., "No" at step 406, the method 400 moves to step 408. Responsive to new components moving, i.e., "Yes" at step 406, the method 400 moves to step 407 and adds the new component(s) and the new component(s') initial position to a list of moving components. This list of moving components may be a data structured stored in memory.

To continue, after step 407 and/or step 406, the method 400 moves to step 408 where the component positions (e.g., X, Y, Z coordinates) are updated in the list of moving components. From step 408 the method 400 moves to step 409 and checks to see if the drag movement is still being performed. In an embodiment, a single drag action may be a series of mouse movements performed while a computer mouse button is clicked down while dragging a component. Once the computer mouse button is released, the drag is considered finished. Thus, in an embodiment, step 409 checks if a mouse button is released. In another embodiment, a computer keyboard may be used to perform a drag operation. In such an embodiment, a drag action may be a series of movements performed while a keyboard key is held down and the drag action is considered complete once the keyboard key is released. Thus, in such an embodiment, step 409 checks if a keyboard key is released. If the component is still being dragged, i.e., a "Yes" at step 409, the method 400 returns to step 403 and the method 400 continues from step 403. If the component is no longer being dragged, i.e., a "No" at step 409, (i.e., cessation of movement of the component) the method 400 moves to step 410 where bounding box and drag ratios are calculated. According to an embodiment, a bounding box ratio determined at step 410 is defined as the ratio between largest component movement length, out of each of the moving components, and the diagonal size of the bounding box determined and stored at step 402. Further, it is noted that the bounding box ratio may also be a ratio between a diagonal of a bounding box after dragging is complete, e.g., bounding box 311, and the initial bounding box. A second ratio determined at step 410 is a drag ratio which is defined as the ratio between the largest component movement length and the length of the drag input. To continue, the method 400 evaluates if the ratios calculated at step 410 are above thresholds. An example embodiment considers the movement to be large if the bounding box ratio is greater than 5, and the drag ratio is greater than 10. If both ratios are above thresholds, i.e., "Yes" at step 412, the method 400 moves to step 413 where both an excessing warning and prompt to undo the movement are displayed to a user. From step 413, the method 400 moves to step 414 where the method 400 ends. If the thresholds are not exceeded, i.e., "No" at step 412, the method 400 ends at step 414.

According to an embodiment of the method 400, one ratio (amongst the bounding box ratio and the drag ratio) exceeding a threshold is not considered a large move. This allows users to drag a component a large way outside the original bounding box if that large movement is apparent to the user. Such a movement would be reflected by a lower drag ratio.

In an embodiment, upon displaying an assembly, a bounding box that encompasses the assembly is determined. Then, an indication of movement is received. According to an embodiment where the indication of movement is an indication of direct movement, e.g., a click, drag, and release action, the bounding box ratio and the drag ratio are used to determine if the movement is excessive. In another embodiment where the indication of movement is of an indirect movement, e.g., a movement resulting from applying or modifying a constraint, a movement is considered excessive if the length of the component movement (or a bounding box when the component is in the final position) in relation to an original bounding box exceeds a threshold.

Embodiments may identify excessive component movement in a modeling space, e.g., a three-dimensional (3D) modeling space, caused by assembly constraints during component manipulation. Embodiments provide for detection and optional correction of excessive component movement caused by valid assembly constraint solutions which are not perceptible to the user while moving or constraining a component. For example, a user of 3D modeling software may intend to move a particular component within a model/assembly; however, due to, e.g., modeling constraints, the particular component may be relocated to a point in the assembly that is unintended and relatively far away from portions of the assembly. This result is likely unintended by the user and may pose issues in navigating the model. For instance, returning the component to a desired location may require significant ergonomic strain and multiple user movements, e.g., via a pointing device. Embodiments prevent this ergonomic strain.

Embodiments may detect scenarios where a component movement is excessive. In this context, excessive may be where a component movement in a 3D modeling space is disproportionately larger than an on-screen movement of the component, e.g., a dragged distance of the component from the perspective of a user performing the on-screen movement. In these embodiments, if an internally set threshold is exceeded the user may receive an on screen warning. The warning may alert the user to the fact that the component has moved an extreme distance. This may be beneficial because the user may be unaware that an excessive movement has occurred until they rotate a view orientation. The presented notification may present the user with a clickable option to undo the component movement that had triggered the warning. According to an embodiment, this warning is passive to the user, meaning they may choose to ignore it.

Embodiments can be implemented in existing software and CAD and computer aided engineering (CAE) platforms. For instance, embodiments can be implemented using features and functionalities of the SolidWorks^{®} application by Applicant-Assignee Dassault Systèmes SolidWorks Corporation, among other examples.

FIG. 5 is a schematic view of a computer network in which embodiments may be implemented. Client computer(s)/devices 50 and server computer(s) 60 provide processing, storage, and input/output (I/O) devices executing application programs and the like. Client computer(s)/device(s) 50 can also be linked through communications network 70 to other computing devices, including other client device(s)/processor(s) 50 and server computer(s) 60. The communications network 70 can be part of a remote access network, a global network (e.g., the Internet), cloud computing servers or service, a worldwide collection of computers, local area or wide area networks, and gateways that currently use respective protocols (e.g., TCP/IP, Bluetooth^{®}, etc.) to communicate with one another. Other electronic device/computer network architectures are also suitable.

FIG. 6 is a block diagram illustrating an example embodiment of a computer node (e.g., client processor(s)/device(s) 50 or server computer(s) 60) in the computer network 70 of FIG. 5. Each computer node 50, 60 contains system bus 79, where a bus is a set of hardware lines used for data transfer among components of a computer or processing system. The system bus 79 is essentially a shared conduit that connects different elements of a computer system (e.g., processor, disk storage, memory, I/O ports, network ports, etc.) that enables transfer of information between the elements. Attached to the system bus 79 is an I/O devices interface 82 for connecting various input and output devices (e.g., keyboard, mouse, display(s), printer(s), speaker(s), etc.) to the computer node 50, 60. A network interface 86 allows the computer node to connect to various other devices attached to a network (e.g., the network 70 of FIG. 5). A memory 90 provides volatile storage for computer software instructions 92a and data 94a used to implement an embodiment of the present disclosure. Disk storage 95 provides non-volatile storage for the computer software instructions 92b and data 94b used to implement an embodiment of the present disclosure. A central processor unit 84 is also attached to the system bus 79 and provides for execution of computer instructions.

In one embodiment, the processor routines 92a-92b and data 94a-94b are a computer program product (generally referenced as 92), including a non-transitory, computer readable medium (e.g., a removable storage medium such as DVD-ROM(s), CD-ROM(s), diskette(s), tape(s), etc.) that provides at least a portion of the software instructions for the embodiment. The computer program product 92 can be installed by any suitable software installation procedure, as is well known in the art. In another embodiment, at least a portion of the software instructions may also be downloaded over a cable, communication, and/or wireless connection. In other embodiments, the disclosure programs are a computer program propagated signal product embodied on a propagated signal on a propagation medium (e.g., a radio wave, an infrared wave, a laser wave, a sound wave, or an electrical wave propagated over a global network such as the Internet, or other network(s)). Such carrier medium or signals provide at least a portion of the software instructions for the present disclosure routines/program 92.

In alternative embodiments, the propagated signal is an analog carrier wave or digital signal carried on the propagated medium. For example, the propagated signal may be a digitized signal propagated over a global network (e.g., the Internet), a telecommunications network, or other networks (such as the network 70 of FIG. 5). In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of the computer program product 92 is a propagation medium that the computer system 50 may receive and read, such as by receiving the propagation medium and identifying a propagated signal embodied in the propagation medium, as described above for a computer program propagated signal product.

Generally speaking, the term "carrier medium" or transient carrier encompasses the foregoing transient signals, propagated signals, propagated medium, storage medium, and the like.

In other embodiments, the program product 92 may be implemented as a so-called Software as a Service (SaaS), or other installation or communication supporting end-users.

Embodiments or aspects thereof may be implemented in the form of hardware including but not limited to hardware circuitry, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

While example embodiments have been particularly shown and described, it will be understood by those skilled in the art that various changes in form and details may be made therein without departing from the scope of the embodiments encompassed by the appended claims.

For example, the foregoing description and details of embodiments reference Applicant-Assignee (Dassault Systèmes SolidWorks Corporation) and Dassault Systèmes tools and platforms, for purposes of illustration and not limitation. Other similar tools and platforms are also suitable.

The teachings of all patents, published applications, and references cited herein are incorporated by reference in their entirety.

### References

https://en.wikipedia.org/wiki/Transformation_matrix

## Claims

1. A computer-implemented method for detecting excessive component movement in a computer-aided design (CAD) assembly, the method comprising, by a processor:
displaying (201), in a computer interface, a CAD assembly comprising a plurality of components;
determining (202) a bounding box encompassing the CAD assembly displayed;
receiving (203) an indication of movement of a component, of the plurality of components, from a starting position to a final position;
based on the bounding box and the indication of movement received, evaluating (204) the movement with respect to at least one threshold; and
responsive (205) to the evaluating determining the movement exceeds the at least one threshold, presenting a notification to a user in the computer interface.

2. The method of Claim 1, wherein the received indication of movement indicates a drag action on the component in the computer interface.

3. The method of Claim 2, wherein evaluating the movement with respect to the at least one threshold comprises:
calculating a first ratio between: (i) a length between the starting position and the final position and (ii) a geometric property of the bounding box; and
calculating a second ratio between: (i) the length between the starting position and the final position and (ii) a length of the drag action.

4. The method of Claim 3, wherein the at least one threshold comprises a first threshold and a second threshold, and wherein evaluating the movement with respect to the at least one threshold comprises:
comparing the first ratio to the first threshold;
comparing the second ratio to the second threshold; and
responsive to comparing the first ratio to the first threshold determining the first threshold is exceeded, and responsive to comparing the second ratio to the second threshold determining the second threshold is exceeded, determining the movement exceeds the at least one threshold.

5. The method of Claim 3 or 4, wherein the geometric property of the bounding box is a diagonal size of the bounding box.

6. The method of Claim 1, wherein the received indication of movement indicates at least one of applying or modifying a constraint with respect to the component, and wherein applying or modifying the constraint causes the component to move from the starting position to the final position.

7. The method of Claim 6, wherein evaluating the movement with respect to the at least one threshold comprises:
calculating a ratio between: (i) a length between the starting position and the final position and (ii) a geometric property of the bounding box.

8. The method of Claim 7, wherein evaluating the movement with respect to the at least one threshold comprises:
comparing the ratio to the at least one threshold; and
responsive to comparing the ratio to the at least one threshold determining the at least one threshold is exceeded, determining the movement exceeds the at least one threshold.

9. The method of any one of Claims 1 to 8, wherein the presented notification comprises an indication that the component has moved an excessive distance.

10. The method of any one of Claims 1 to 9, wherein the presented notification comprises an option to undo the movement and the method further comprises:
responsive to the presented notification, receiving an indication to undo the movement; and
responsive to receiving the indication to undo the movement, returning the component to the starting position.

11. A computer-implemented method for detecting excessive component movement in a computer-aided design (CAD) assembly, the method comprising, by a processor:
displaying, in a computer interface, a CAD assembly comprising a plurality of components;
receiving an indication of initiation of a movement action;
responsive to receiving the indication of initiation of the movement action:
determining a bounding box encompassing the CAD assembly displayed; and
tracking movement of each moving component of the plurality of components;
receiving an indication of cessation of the movement action; and
responsive to receiving the indication of cessation of the movement action:
based on the tracking, determining a largest movement amongst the movement of each moving component of the plurality of components;
based on the bounding box, evaluating the largest movement with respect to at least one threshold; and
responsive to the evaluating determining the largest movement exceeds the at least one threshold, presenting a notification to a user in the computer interface.

12. The method of Claim 11, wherein tracking movement of each moving component of the plurality of components comprises:
storing, in a data structure, a starting position and a corresponding final position of each moving component.

13. The method of Claim 12, wherein determining the largest movement comprises:
using the data structure, calculating movement length as distance between each starting position and corresponding final position; and
determining the largest movement as a movement having a longest movement length.

14. A computer program comprising instructions which, when the program is executed by a computer, cause the computer to carry out the method of any one of claims 1 to 10 and/or the method of any one of claims 11 to 13.

15. A computer-implemented system for detecting excessive component movement in a computer-aided design (CAD) assembly, the system comprising:
a processor; and
a memory with computer code instructions stored thereon, the processor and the memory, with the computer code instructions, being configured to cause the system to perform the method of any one of claims 1 to 10 and/or the method of any one of claims 11 to 13.
